# NEUE EUROPÄISCHE PATENTSCHRIFT

(11) **EP 0 947 268 B2**
(45) Veröffentlichungstag und Bekanntmachung des Hinweises auf die Entscheidung über den Einspruch: **19.04.2017**
(45) Hinweis auf die Patenterteilung: 06.10.2004
(21) Anmeldenummer: 99890086.4
(22) Anmeldetag: 10.03.1999
(51) Int. Cl.: B23B 27/14

(54) **Schneideinsatz für Zerspanungswerkzeuge**
Cutting insert for machining tools
Plaquette de coupe pour outils d'usinage

(30) Priorität: 31.03.1998 AT 56398
(43) Veröffentlichungstag der Anmeldung: 06.10.1999
(73) Patentinhaber: BOEHLERIT GmbH & Co.KG., 8605 Kapfenberg (AT)
(72) Erfinder: Schlemmer, Armin, 8700 Leoben (AT); Bärnthaler, Walter, 8644 Mürzhofen (AT); Melcher, Gerhard, 8130 Frohnleiten (AT)
(74) Vertreter: Wirnsberger, Gernot

(56) Entgegenhaltungen:
- EP-A1- 0 125 568
- EP-A3- 0 414 241
- EP-B1- 0 065 124
- EP-B1- 0 307 563
- WO-A-95/25611
- WO-A-96/18472
- WO-A1-95/25618
- DE-A- 2 252 349
- DE-A1- 4 415 491
- DE-A1- 4 434 428
- DE-B2- 2 851 584
- DE-C- 542 911
- DE-C2- 2 544 991
- DE-C2- 4 201 112
- GB-A- 350 706
- US-A- 4 087 192
- US-A- 4 367 990
- US-A- 5 044 840
- US-A- 5 688 081

## Beschreibung

Die Erfindung betrifft einen Schneideinsatz für Zerspanungswerkzeuge gemäß dem Oberbegriff des Anspruchs 1.

Es sind Schneideinsätze der genannten Art mit einer Vielzahl von unterschiedlich ausgebildeten Oberseiltenformen, welche insbesondere den Spanwinkel γ sowie vorteilhaft die Spanformung und rückwirkend die Bearbeitung selbst, die Oberflächengüte des Werkstücks und dergleichen beeinflussen sollen, bekannt.

Bei einem Zerspanen weicher und zäher Werkstoffe, zum Beispiel Aluminium, Kupfer sowie deren Legierungen kann sich auf der Schneide ein unerwünschter Ansatz, eine sogenannte Aufbauschneide, bilden, der bzw. die zu rauhen und rissigen Oberflächen am Werkstück führt. Weiters kann bei diesen Werkstoffen eine Tendenz zum Kleben des Spanes am Werkzeug gegeben sein, was insgesamt durch Erhöhen der Schnittgeschwindigkeit durch eine geläppte Spanfläche und durch vergrößerte Spandicken zu vermeiden getrachtet wird.

Oben genannte Werkstoffe sind durchwegs langspanend, das heißt, dass die vom Schneideinsatz abgehobenen Späne eine große Länge mit einer meist spiraligen Form aufweisen und den Bearbeitungsprozeß stören können. Ein erforderliches Ausbringen der verwundenen Späne oder eines Spanknäuels aus dem Werkzeugbereich ist jedoch aufwendig, muss zumeist händisch erfolgen und verringert die Wirtschaftlichkeit der spanabehebenden Formgebung.

Für ein Abspanen von Aluminiumlegierungen, beispielsweise solchen mit Silizium und Kupfer als Legierungselemente, ist aus der WO 95/25611 ein in der Draufsicht mit spitzwinkelig verlaufender Schneidkante versehener Schneideinsatz bekannt geworden, der mit Diamant beschichtet ist und eine Spanmulde mit zentrisch wellenförmig ausgebildeten Erhebungen und Vertiefungen aufweist

Mittels einer besonderen Ausformung der Oberseite sowie durch eine Anordnung von Spanformelementen im Schneidkantenbereich des Schneideinsatzes wurde schon versucht den abgehobenen Span zu brechen bzw die Spanlänge zu verkürzen.

In der WO-A-96/18472 sind Schneidplatten für ein Bohrwerkzeug offenbart, welche in Richtung des Bohrvorschubes bzw. in Arbeitsrichtung einen stumpfen Winkel der Schneidkanten aufweisen. An der Oberseite der Schneidplatten sind bogenförmige, nach Art von Gleitkufen wirkende Spanformrippen radial einwärts in Richtung zur Bohrwerkzeugachse angeordnet, durch welche ein leichter Austrag der gebildeten Spanwendel aus der Spankammer erreicht werden soll.

Es sind Schneideinsätze bekannt, die auf ihrer Oberseite umlaufende und gleichmäßig geformte Spanformrillen besitzen. Ferner gibt es Schneideinsätze, bei denen Teile der Oberfläche als Spanformelemente wirken. So werden häufig Schneideinsätze benutzt, welche im Eckenbereich und im Bereich der angrenzenden Schneidkantenabschnitte sich kontinuierlich erstrekkende Spanleitstufen aufweisen, die gegebenenfalls von der Schneidecke zur Schneidkantenmitte hin in ihrer Breite zunehmen.

Die Nachteile der bekannten Schneideinsätze bestehen im wesentlichen darin, daß die Güte der Abspanung sowie die Spanformung von der Schnittiefe und der Schnittgeschwindigkeit, welche nur in wenigen Fällen optimal wählbar ist, abhängen und daß bei welchen und zähen Werkstoffen ein ungünstiger Langspan gebildet wird.

Der Erfindung liegt nun die Aufgabe zugrunde, die Mängel der bekannten Zerspanungswerkzeuge zu beseitigen und einen Schneideinsatz der eingangs genannten Art zu schaffen, mit welchem eine spanende Bearbeitung mit hoher Oberflächengüte des Erzeugnisses sowie mit geringen Schnittkräften bei günstiger Spanbildung erfolgt, wobei die Bruchgefahr bzw die Gefahr einer Schneidkantenbeschädigung gering ist.

Diese der Erfindung zugrunde liegende Aufgabe wird durch die kennzeichnenden Merkmale des Anspruchs 1 gelöst.

Der wesentliche, mit der Erfindung erzielte Vorteil ist darin zu sehen, daß ein Span mit welligem Querschnittsprofil gebildet wird. Dabei entsteht in den Wellentälem bzw in den konkaven Längsriefen, also im Bereich des verminderten Spanquerschnittes eine Querzugspannung, wohingegen im Bereich der Wellenberge bzw Erhebungen eine Querstauchung des Materials erfolgt. Beim Schnitt überlagem diese Querkräfte, und gegebenenfalls die gleichgerichteten Verformungen, die Spanlängskräfte bzw die dergleichen Spanverformungen, wodurch die Materialbeanspruchungen im Span derart erhöht werden, daß ein Brechen desselben gefördert wird. Vollkommen überraschend ist weiters, daß, obwohl eine wellige oder dergleichen Spanleitfläche gegenüber einer ebenen geläppten Ausführung zumeist eine höhere Mikrorauhigkelt besitzt, der Span im wesentlichen keinerlei Neigung zum Kleben im Schneidkantenbereich des erfindungsgemäßen Einsatzes aufweist und leicht ausbringbar ist. Dadurch verringem sich offensichtlich die Staukräfte im Span zur Schneidkante hin, was eine kleinere mechanische Schneidkantenbelastung und eine Verbesserung der Oberflächengüte des Werkstückes nach dessen Bearbeitung bewirkt. Die dabei verringerten Schnittkräfte erhöhen auch die Ausbruchsicherheit im Kantenbereich des Schneideinsatzes. Eine, wie gefunden wurde, wesentliche Verringerung der Tendenz zur Bildung von Aufbauschneiden ist wissenschaftlich noch nicht ausreichend klargestellt, könnte jedoch bei einer vorliegenden Schneidgeometrie durch verkleinerte Staukräfte im Span und durch die Riefen-, Stufen- oder Wellenform der Schneidkante begründet sein. Da weiters die Schneidkante an der Schneidecke einen Tangentenwinkel (SIGMA) von 20 bis 30 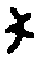 ° aufweist und nachfolgend bogenförmig, insbesondere mit einem Kreisbogenradius (Rₜ) von 5 bis 30 mm abfallend zur Schneidenmitte hin ausgebildet ist, können besonders gute Bearbeitungsergebnisse, vorzugsweise bei Aluminium-, Knet- und Gußlegierungen erreicht werden. Ein zusätzlicher günstiger Einfluß im Hinblick auf eine Kurzspanbildung kann erzielt werden, wenn die oberseitige Spanleitfläche im Bereich der Schneidkanten kreisbogenförmig, insbesondere mit einem Radius (Rₛ) von 4 bis 25 mm gekrümmt, ausgebildet ist.

Sowohl für eine hohe Oberflächengüte bei unterschiedlichen Spantiefen als auch für eine vorteilhafte Spanformung bei unterschiedlichen Schnittgeschwindigkeiten ist erfindungsgemäß vorgesehen, dass der Spanleitwinkel γ (GAMMA) größer als 15 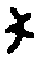 ° ist und von der Schneidekke zur Schneidkantenmitte abfallend, insbesondere von einem Wert zwischen 20 und 30 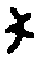 ° auf einem solchen von 18 und 25 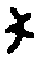 ° abfallend, ausgebildet ist.

Bei dieser Ausbildung der Oberseite ist hinsichtlich einer gewünschten Spanformung günstig, wenn der Riefen-, Stufen- oder Wellenabstand 0,2 bis 2,0 mm, insbesondere 0,5 bis 1 mm, beträgt. Wenn dabei die Riefen, Stufen oder Wellen eine Tiefe von 0,05 bis 0,25, vorzugsweise von bis 0,15 mm aufweisen sind vorteilhaft besonders hohe Oberflächengüten des bearbeiteten Werkstückes erreichbar. Kleinere Wellenabstände erbringen einen nachteiligen Einfluß auf die Spanformung, wobei geringere Tiefen der Wellen eine Klebeneigung des Spanes sprunghaft intensiviert. Größere Wellenabstände und Wellentiefen können zu vorzeitigem Werkzeugverschleiß führen.

Im Sinne einer guten Schneidhaltigkeit und einer geringen Neigung zu Ausbrüchen, insbesondere der vorragenden Bereiche der gezahnten Schneidkante hat es sich als günstig erwiesen, wenn benachbarte Flankenflächen der Riefen, Stufen oder Wellen mit einem Winkel η (ETA) von größer oder gleich dem Keilwinkel β (BETA) zueinander ausgebildet sind.

Bevorzugt sind die Riefen oder Wellen mit einem Winkel ρ (RHO) zwischen 75 und 135 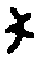 °, insbesondere im wesentlichen rechtswinkelig, auf die Schneidkante ausgerichtet, gebildet, wodurch deren günstige Wirkung am erfindungsgemäßen Schneideinsatz hinsichtlich hoher Querbeanspruchungen des Spanes erhöht ist.

Ein Brechen des an der im wesentlichen konkav gekrümmten Oberseite des Schneideinsatzes ablaufenden Spanes kann weiters gefördert werden, wenn die Oberseite zentrisch, vom Bereich der Schneidecke bis zu jenem des zentralen Befestigungsloches, eine lokate Erhebung aufweist.

Wenn, wie weiters vorgesehen werden kann, das Befestigungsloch an der Auflagefläche vergrößert ausgebildet ist, wird eine besonders stabile Fixierung des Schneideinsatzes am Werkzeug erreicht.

Die vorteilhaften Wirkungen des erfindungsgemäßen Schneideinsatzes, insbesondere bei der spanenden Bearbeitung von Leichtmetallen und Kunststoffen, kann weiter gesteigert werden, wenn dieser zumindest im Schneide- und Spanleitbereich eine mittels Plasma-CVD-Verfahrens aufgebrachte Beschichtung, vorzugsweise eine Titan, Aluminium und Stickstoff enthaltende Beschichtung, insbesondere mit einer Schichtstärke von 0,8 bis 1,8 um trägt. Damit ist es möglich, die auf den abgleitenden Span wirkenden Reibungskräfte weiter zu emiedrigen.

Besonders vorteilhaft, betreffend hohe Standzeiten des Schneideinsatzes, auch für eine Verwendung des Werkzeuges zur Schlichtbearbeitung von hochlegierten zähen Werkstoffen mit kubisch flächenzentrierter Kristallstruktur, insbesondere von austenitischen Stählen, hat es sich erwiesen, wenn dieser eine nach dem Plasma-CVD-Verfahren aufgebrachte TIAIN - Beschichtung trägt.

Eine Diamantbeschichtung des Schneideinsatzes ist, wie sich gezeigt hat, besonders günstig für die Bearbeitung von Nichteisenmetallen und Kunststoffen, insbesondere von faserverstärkten Kunststoffen, und erbringt eine wesentliche Verlängerung der Standzeit des Werkzeuges

Im folgenden wird die Erfindung anhand von lediglich eine Ausführungsform darstellenden Zeichnungen näher erläutert. Es zeigen:
- Fig. 1: Aufsicht auf einen viereckigen Schneideinsatz
- Fig. 2: Axialer Schnitt des in Fig. 1 dargestellten Schneideinsatzes
- Fig. 3: Seitenansicht des in Fig. 1 dargestellten Schneideinsatzes
- Fig. 4: Weitere Seitenansicht des in Fig.1 dargestellten Schneideinsatzes
- Fig. 5: Schnitt A-A im Schneideckenbereich des Schneideinsatzes gemäß Fig. 1
- Fig. 6: Schnitt B-B im Schneideckenbereich des Schneideinsatzes gemäß Fig. 1
- Fig. 7: Schnitt C-C im Schneidkantenbereich des Schneideinsatzes gemäß Fig. 1
- Fig. 8: Schnitt D-D im Schneidkantenbereich des Schneideinsatzes gemäß Fig. 1

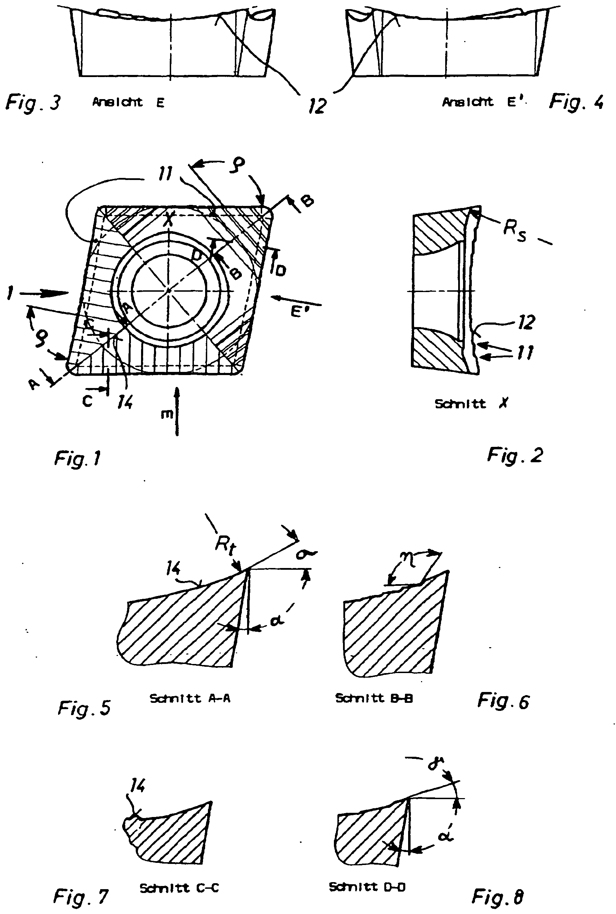

Die in Fig. 1 wiedergegebene Aufsicht auf einen Schneideinsatz 1 zeigt zwei erfindungsgemäße Ausführungsformen von dessen Oberseite. Im rechts oberseitigen Teilbild sind bis zur Symmetrieaxe Stufen 11 schematisch dargestellt, welche in einer Spanleitmulde durchgehend zwischen den Schneidkanten 12, diese verbindend, angeordnet sind. Die Stufen 11 sind mit einem Winkel ρ von ca. 130 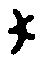 ° auf die Schneidkanten 12 zur Schneidecke hin ausgebildet. In Fig. 2 ist ein Schnitt x einer derartigen Ausführungsform eines Einsatzes 1 gezeigt, welcher Stufen 11 in den Schneidkanten 12 verdeutlicht. Im Schneidkantenbereich zum Befestigungshohl hin ist die Oberseite des Einsatzes 1 abgesenkt, im dargesteilten Beispiel mit einem Radius Rₛ konkav, ausgebildet. Fig. 4 zeigt, in einer Seitenansicht E' den aus Fig. 1 ersichtlichen Schneideinsatz 1 und vermittelt eine von der Schneidecke abfallende gezahnte Schneidkante 12. In Fig. 6 ist ein axsymetrischer Schnitt B-B von einer Schneidecke zum Zentrum des Schneideinsatzes hin gezeigt. Benachbarte Flankenflächen der Stufen 11 weisen zueinander einen Winkel η auf. Aus einem weiteren senkrecht zur Schneidkante 12 gelegten Schnitt D-D (Fig. 8) sind der Freiwinkel α und der Spanwinkel γ des erfindungsgemäßen Schneideinsatzes gezeigt.

Im links unterseitigen Teilbild von Fig. 1 ist eine weitere erfindungsgemäße Ausführungsform der Oberseite eines Schneideinsatzes 1 wiedergegeben, welche Oberseite eine Wellenform besitzt. Die Wellen 11 sind senkrecht bzw mit einem Winkel ρ von 90 ° auf die Schneidkanten 12 ausgerichtet. Im Randbereich an der Schneidkante 12 zur Symmetrieaxe hin ist die Oberseite des Einsatzes 1 abgesenkt, weist jedoch zentrisch, vom Bereich der Schneidecke zum Befestigungsloch hin gerichtet, eine lokale Erhebung 14 auf. Aus Fig. 5 ist ein Schnitt A-A in Axrichtung des Schneideinsatzes 1 ersichtlich. Von der Schneidecke verläuft die Oberseite konkav, einen Tangentenwinkel α-bildend, kreisbogenförmig mit einem Radius Rₜ, in Richtung zum Zentrum des Einsatzes 1 hin, wobei der Schnitt durch die lokale Erhebung 14 führt. In Fig. 7 ist an einem weiteren Schnitt C-C, senkrecht zur Schneidkante, die lokale Erhebung 14 veranschaulicht. Fig. 3 zeigt eine Seitenansicht E des in Fig. 1 dargestellten Schneideinsatzes 1 mit einer erfindungsgemäßen welligen Schneidkante 12.

## Patentansprüche

1. Schneideinsatz (1) für Zerspanungswertezeuge, insbesondere Werkzeuge zur Bearbeitung von Nichteisenmetallen und deren Legierungen, Kunststoffen sowie ein dergleichen Zerspanungsverhalten aufweisende Materialien, mit mindestens einer Schneidecke und, von dieser ausgehend in der Draufsicht spitzwinkelig verlaufenden abfallenden Schneidkanten (12) und einer der Auflagefläche gegenüberliegenden Oberseite, deren Innenzone zumindest im Randbereich abgesenkt ist und mit den Seitenflächen bzw. Freiflächen Schneidkanten blidet, wobei die Oberseite zumindest im abgesenkten Randbereich eine Riefenform, Stufenform oder Wellenform (11) besitzt und mit der Seitenfläche bzw. Freifläche eine gezahnte, stufenförmige oder wellige Schneidkante (12) bildet, **dadurch gekennzeichnet, dass** die oberseitige Spanleitfläche im Bereich der Schneidkanten konkav gekrümmt ausgebildet ist, der Spanleitwinkel (γ = GAMMA) größer als 15° ist und von der Schneidecke zur Schneidkantenmitte abfallend ausgebildet ist und die Schneidkante an der Schneidecke einen Tangentenwinkel (σ = SIGMA) von 20 bis 30° aufweist und nachfolgend bogenförmig abfallend zur Schneidenmitte hin, ausgebildet ist.

2. Schneideinsatz nach Anspruch 1, **dadurch gekennzeichnet, daß** der Riefen-, Stufen- oder Wellenabstand 0,2 bis 2,0 mm, insbesondere 0.5 bis 1 mm, beträgt.

3. Schneideinsatz nach Anspruch 1 oder 2, **dadurch gekennzeichnet, daß** die Riefen, Stufen oder Wellen eine Tiefe von 0,05 bis 0,25 mm, vorzugsweise von bis 0,15 mm aufweisen.

4. Schneideinsatz nach einem der Ansprüche 1 bis 3, **dadurch gekennzeichnet daß** benachbarte Flankenflächen der Riefen. Stufen oder Wellen mit einen Winkel (η = ETA) von größer oder gleich dem Keilwinkel (β=BETA) zueinander ausgebildet sind.

5. Schneideinsatz nach einem der Ansprüche 1 bis 4, **dadurch gekennzeichnet, daß** die Riefen oder Wellen (11) mit einem Winkel (ρ=RHO) zwischen 75 und 135 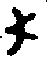 °, vorzugsweise im wesentlichen rechtwinkelig auf die Schneidkante ausgerichtet, gebildet sind.

6. Schneideinsatz nach einem der Ansprüche 1 bis 5, **dadurch gekennzeichnet, daß** die Schneidkante bogenförmig, mit einem Kreisbogenradius (Rₜ) von 5 bis 30 mm abfallend zur Schneidenmitte hin, ausgebildet ist.

7. Schneideinsatz nach einem der Ansprüche 1 bis 6, **dadurch gekennzeichnet, daß** die Oberseite zentrisch, vom Bereich der Schneidecke bis zu jenem des zentralen Befestigungsloches, eine lokale Erhebung (14) aufweist.

8. Schneideinsatz nach einem der Ansprüche 1 bis 7, **dadurch gekennzeichnet, daß** die oberseitige Spanleitfläche zumindest im Bereich der Schneidkanten konkav kreisbogenförmig, mit einem Radius (Rₛ) von 4 bis 25 mm gekrümmt, ausgebildet ist

9. Schneideinsatz nach einem der Ansprüche 1 bis 8, **dadurch gekennzeichnet, daß** der Spanleiltwinkel (γ=GAMMA) von der Schneidecke zur Schneidkantenmitte, von einem Wert zwischen 20 und 30 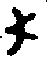 ° auf einem solchen von 18 und 25 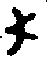 ° abfallend, ausgebildet ist.

10. Schneideinsatz nach einem der Ansprüche 1 bis 9, **dadurch gekennzeichnet, daß** das Befestigungsloch an der Auflagefläche vergrößert ausgebildet ist.

11. Schneideinsatz nach einem der Ansprüche 1 bis 10, **dadurch gekennzeichnet, daß** dieser zumindest im Schneide- und Spanleitbereich eine mittels Plasma-CVD-Verfahrens aufgebrachte Beschichtung, vorzugweise eine Titan, Aluminium und Stickstoff enthaltende Beschichtung, insbesondere mit einer Schichtstärke von 0,8 bis 1,8 µm trägt.

12. Schneideinsatz nach einem der Ansprüche 1 bis 10, **dadurch gekennzeichnet, daß** dieser eine nach dem CVD-Verfahren aufgebrachte Diamantbeschichtung trägt.

13. Verwendung eines Schneideinsatzes gemäß der Ansprüche 1 bis 12 zur Bearbeitung von Al-Gußlegierungen insbesondere Si Al-Gußlegierungen sowie Al-Knetlegierungen wie aushärtbare und nichtaushärtbare Al-Knetlegierungen sowie Kunststoffe.

14. Verwendung eines Schneideinsatzes nach einem der Ansprüche 1 bis 12 zur Schlichtbearbeitung von hochiegierten Werkstoffen mit kubisch-flächenzentrierter Kristallstruktur insbesondere von austenitischen Stählen.

## Claims

1. Cutting insert (1) for chip-removal cutting tools, in particular tools for machining nonferrous metals and their alloys, plastics and also materials exhibiting similar chip-removal cutting behaviour, having at least one cutting corner and, leading off from the latter, cutting edges (12) which fall away and, in plan view, are at an acute angle, and having an upper side which is opposite the supporting surface and the inner zone of which is sunken at least in the border region and which forms cutting edges with the side faces or relief faces, wherein the upper side has a grooved, stepped or wavy shape (11) at least in the sunken border region and forms an indented, stepped or wavy cutting edge (12) with the side face or relief face, **characterised in that** the upper-side chip-guiding surface is formed in the region of the cutting edges so as to be concavely curved, the chip-guiding angle (γ = GAMMA) is greater than 15° and is formed so as to decrease from the cutting corner to the cutting edge centre and the cutting edge has a tangent angle (σ = SIGMA) of 20 to 30 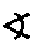 ° at the cutting corner and, following that, is formed in an arc shape.

2. Cutting insert according to Claim 1, **characterised in that** the groove, step or wave spacing is 0.2 to 2.0 mm, in particular 0.5 to 1 mm.

3. Cutting insert according to Claim 1 or 2, **characterised in that** the grooves, steps or waves have a depth of 0.05 to 0.25 mm, preferably of up to 0.15 mm.

4. Cutting insert according to one of Claims 1 to 3, **characterised in that** adjacent flank faces of the grooves, steps or waves are formed with an angle (η = ETA) greater than or equal to the wedge angle (β = BETA) relative to one another.

5. Cutting insert according to one of Claims 1 to 4, **characterised in that** the grooves or waves (11) are formed with an angle (ρ = RHO) of between 75 and 135 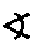 °, preferably so as to be oriented substantially at right angles to the cutting edge.

6. Cutting insert according to one of Claims 1 to 5, **characterised in that** the cutting edge is formed with an arc shape with a circular arc radius (Rₜ) of 5 to 30 mm falling away towards the cutting edge centre.

7. Cutting insert according to one of Claims 1 to 6, **characterised in that** the upper side has a local elevation (14) at the centre, from the region of the cutting corner up to that of the central fastening hole.

8. Cutting insert according to one of Claims 1 to 7, **characterised in that** the upper-side chip-guiding surface is formed, at least in the region of the cutting edges, so as to be concavely curved in the shape of a circular arc with a radius (Rₛ) of 4 to 25 mm.

9. Cutting insert according to one of Claims 1 to 8, **characterised in that** the chip-guiding angle (γ = GAMMA) and is formed so as to decrease from the cutting corner to the cutting edge centre from a value of between 20 and 30 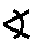 ° to one between 18 and 25 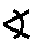 °.

10. Cutting insert according to one of Claims 1 to 9, **characterised in that** the fastening hole is of enlarged form at the supporting surface.

11. Cutting insert according to one of Claims 1 to 10, **characterised in that** the insert bears, at least in the cutting-edge and chip-guiding region, a coating deposited by means of the plasma CVD process, preferably a coating containing titanium, aluminium and nitrogen, in particular with a coating thickness of 0.8 to 1.8 µm.

12. Cutting insert according to one of Claims 1 to 10, **characterised in that** the insert bears a diamond coating deposited by the CVD process.

13. Use of a cutting insert according to one of Claims 1 to 12 for machining Al casting alloys, in particular Si Al casting alloys, and also Al wrought alloys such as age-hardenable and non-age-hardenable Al wrought alloys, and also plastics.

14. Use of a cutting insert according to one of Claims 1 to 12 for the finish-machining of high-alloy materials having a face-centred cubic crystal structure, in particular of austenitic steels.

## Revendications

1. Insert de coupe (1) pour outils à enlèvement des copeaux, en particulier pour des outils pour l'usinage de métaux non ferreux et de leurs alliages, de matières plastiques ainsi que de matériaux présentant un comportement similaire à l'usinage à enlèvement de copeaux, avec au moins une pointe de coupe et, partant de celle-ci, des arêtes de coupe (12) inclinées s'étendant, vues de dessus, à angle aigu et, opposé à la surface d'appui, un côté supérieur dont la zone intérieure est abaissée au moins dans la zone du bord et qui forme des arêtes de coupe avec les surfaces latérales et/ou les surfaces de dépouille, mais dans au moins la zone de bord abaissée, la face supérieure de l'insert est en forme de stries, de paliers ou de vagues (11) et qu'elle forme avec la surface latérale et/ou la surface de dépouille une arête de coupe dentée, en gradins ou ondulée (12) **caractérisé en ce que** la surface de guidage de copeaux de la face supérieure est réalisée concave en forme d'arc de cercle au moins dans la zone de l'arête de coupe, l'angle de guidage de coupe (γ= GAMMA) est supérieur à 15 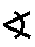 ° et diminue en direction du milieu de l'arête de coupe en partant de la pointe de coupe et l'arête de coupe présente au niveau de la pointe de coupe un angle de tangente σ (SIGMA) de 20 à 30 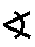 ° et qu'il est ensuite de forme arquée, incliné en diminuant vers le milieu de la lame.

2. Insert de coupe selon la revendication 1, **caractérisé en ce que** l'écart entre les stries, les gradins ou les ondes se situe entre 0,2 et 2,0 mm, en particulier entre 0,5 et 1 mm.

3. Insert de coupe selon la revendication 1 ou 2, **caractérisé en ce que** les stries, gradins ou ondes présentent une profondeur de 0,05 à 0,25 mm, de préférence allant jusqu'à 0,15 mm.

4. Insert de coupe selon l'une quelconque des revendications 1 à 3, **caractérisé en ce que** des surfaces de flancs voisins des stries, gradins ou ondes sont formées avec un angle (η = ETA) supérieur ou égal à l'angle de tranchant (β = BETA).

5. Insert de coupe selon l'une quelconque des revendications 1 à 4, **caractérisé en ce que** les stries ou ondes (11) sont réalisées dans un angle ρ (RHO) entre 75 et 135 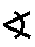 °, en particulier essentiellement à angle droit, orientées en direction de l'arête de coupe.

6. Insert de coupe selon l'une quelconque des revendications 1 à 5, **caractérisé en ce que** l'arête de coupe est ensuite de forme arquée avec un rayon d'arc de cercle (Rₜ) de 5 à 30 mm incliné en diminuant vers le milieu de la lame.

7. Insert de coupe selon l'une quelconque des revendications 1 à 6, **caractérisé en ce que** la face supérieure présente une élévation (14) locale en son centre, depuis la zone de la pointe de coupe jusqu'à celle de l'orifice central de fixation.

8. Insert de coupe selon l'une quelconque des revendications 1 à 7, **caractérisé en ce que** la surface de guidage de copeaux de la face supérieure est réalisée concave en forme d'arc de cercle dans la zone de l'arête de coupe avec un rayon (Rₛ) allant de 4 à 25 mm.

9. Insert de coupe selon l'une quelconque des revendications 1 à 8, **caractérisé en ce que** l'angle de guidage de coupe (γ= GAMMA) est réalisée en direction du milieu de l'arête de coupe en partant de la pointe de coupe d'une valeur située entre 20 et 30 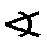 ° diminuant vers une valeur située entre 18 et 25 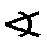 °.

10. Insert de coupe selon l'une quelconque des revendications 1 à 9, **caractérisé en ce que** l'orifice de fixation est réalisé de manière agrandie sur la surface d'appui.

11. Insert de coupe selon l'une quelconque des revendications 1 à 10, **caractérisé en ce que** celui-ci porte, au moins dans la zone de coupe et de guidage des copeaux, un revêtement appliqué au moyen d'un procédé de déposition par vapeur chimique utilisant le procédé plasma contenant de préférence du titane, de l'aluminium et de l'azote, en particulier d'une épaisseur de couche allant de 0,8 à 1,8 µm.

12. Insert de coupe selon l'une quelconque des revendications 1 à 10, **caractérisé en ce que** celui-ci porte un revêtement de diamant appliqué selon le procédé de déposition par vapeur chimique.

13. Utilisation d'un insert de coupe selon les revendications 1 à 12 pour l'usinage d'alliages Al de fonderie, en particulier d'alliages de fonderie Si Al ainsi que d'alliages Al de corroyage, tels que d'alliages Al de corroyage pouvant être durcis et ne pouvant pas être durcis, ainsi que de matières plastiques.

14. Utilisation d'un insert de coupe selon l'une quelconque des revendications 1 à 12 pour le finissage de matières premières fortement alliées avec une structure cristalline cubique à faces centrées, en particulier d'aciers austénitiques.
